# EUROPEAN PATENT SPECIFICATION

(11) **EP 3 210 744 B1**
(45) Date of publication and mention of the grant of the patent: **12.08.2020**
(21) Application number: 17157877.6
(22) Date of filing: 24.02.2017
(51) Int. Cl.: B29C 45/17, B29C 45/80

(54) **INJECTION MOLDING MACHINE**
SPRITZGIESSMASCHINE
MACHINE DE MOULAGE PAR INJECTION

(30) Priority: 29.02.2016 JP 2016037976
(43) Date of publication of application: 30.08.2017
(73) Proprietor: Sumitomo Heavy Industries, Ltd., Tokyo 141-6025 (JP)
(72) Inventor: ISHII, Tsutomu, Chiba-shi, Chiba 263-0001 (JP); MATSUDO, Tatsuaki, Chiba-shi, Chiba 263-0001 (JP)
(74) Representative: Louis Pöhlau Lohrentz

(56) References cited:
- DE-A1- 19 716 777
- JP-A- S6 377 723
- JP-A- S63 202 419
- US-A1- 2006 159 793
- US-B1- 6 447 282

## Description

### BACKGROUND OF THE INVENTION

### Field of the Invention

Certain embodiments of the present invention relate to an injection molding machine.

### Description of Related Art

United States Patent Application US 2006/159793 describes an injection unit for attaching a second injection cylinder to a platen of a standard injection-molding machine.

United States Patent US 6 447 282 provides an apparatus capable of smoothly swiveling an injection unit mounted on a slide base which can move linearly up to a point where a pivot pin restricts the further forward movement and switches the base to a pivotable state.

Japanese Patent Document JP S6377723 discloses an injection molding machine in which a base can move linearly within a predetermined range followed by a turning movement about a pin.

Japanese Patent Document JP S63202419 discloses an eccentricity detector by which the amount and direction of bending of a nozzle is detected
The injection molding machine disclosed in Japanese Unexamined Patent Application Publication No. 2002-178369 has a vertical mold clamping unit and an injection unit. The vertical mold clamping unit clamps a pair of upper and lower molds together . The injection unit injects and fills molten resin into a molding cavity formed between the pair of upper and lower molds. The injection unit has a heating cylinder extending in a horizontal direction and an injection nozzle which is provided at the tip of the heating cylinder. The injection nozzle is brought into contact with the mold and the molten resin is injected and filled from the injection nozzle into the molding cavity. If the molds are displaced due to mold clamping, release thereof, or the like in a state where the injection nozzle is brought into contact with the mold, the injection nozzle oscillates following the displacement. For this reason, damage to the nozzle contact site of the mold or the injection nozzle can be prevented.

Incidentally, the injection unit slides, thereby coming into contact with another unit, and thus there is a concern that these parts may be broken.

### SUMMARY OF THE INVENTION

The present invention has been made in view of the above problem and has a main object to provide an injection molding machine in which breakage of a part due to sliding of an injection unit is suppressed.

In order to solve the above problem, according to an aspect of the present invention, there is provided an injection molding machine including: a mold clamping unit which performs mold closing, mold clamping, and mold opening of a mold unit; an injection unit which is made so as to be able to slide with respect to the mold clamping unit in a first direction and a second direction which are different from each other and fills the inside of the mold unit with a molding material; and a monitoring unit which determines whether or not a predetermined unit interferes with sliding of the injection unit in the first direction, based on a position of the injection unit in the second direction.

Further, according to another aspect of the present invention, there is provided an injection molding machine including: a mold clamping unit which performs mold closing, mold clamping, and mold opening of a mold unit; a first injection unit which is made so as to be able to slide with respect to the mold clamping unit and fills the inside of the mold unit with a molding material; a second injection unit which is made so as to be able to slide with respect to the mold clamping unit independently of the first injection unit and fills the inside of the mold unit with a molding material; and a monitoring unit which determines whether or not the injection unit on one side out of the first injection unit and the second injection unit interferes with sliding of the injection unit on the other side, based on a position of the injection unit on one side.

According to the aspect of the present invention, an injection molding machine is provided in which breakage of a part due to sliding of an injection unit is suppressed.

### BRIEF DESCRIPTION OF THE DRAWINGS

Fig. 1 is a diagram showing an operation of an injection molding machine according to an embodiment and is a diagram showing an operation in which a first nozzle of a first injection unit slides in an up-and-down direction while facing a nozzle receiving portion on the upper surface of a stationary mold.
Fig. 2 is a diagram showing an operation of the injection molding machine according to the embodiment and is a diagram showing an operation in which the first nozzle of the first injection unit slides in a mold opening and closing direction at a position higher than a stationary platen.
Fig. 3 is a diagram showing an operation of the injection molding machine according to the embodiment and is a diagram showing an operation in which the first nozzle of the first injection unit slides in the mold opening and closing direction at a position higher than the stationary mold and lower than the stationary platen.
Fig. 4 is a diagram showing an operation of the injection molding machine according to the embodiment and is a diagram showing an operation in which the first nozzle of the first injection unit slides in the up-and-down direction at a position which faces the stationary platen.
Fig. 5 is a diagram showing an operation of the injection molding machine according to the embodiment and is a diagram showing an operation in which the first nozzle of the first injection unit slides in the mold opening and closing direction at a position higher than the stationary platen in a state where a second nozzle of a second injection unit is brought into contact with a mold unit.
Fig. 6 is a diagram showing an operation of the injection molding machine according to the embodiment and is a diagram showing an operation in which the second injection unit slides in the mold opening and closing direction.

### DETAILED DESCRIPTION OF THE INVENTION

Hereinafter, a mode for carrying out the present invention will be described with reference to the drawings. In each of the drawings, the same configuration is denoted by the same reference numeral and a description thereof is omitted.

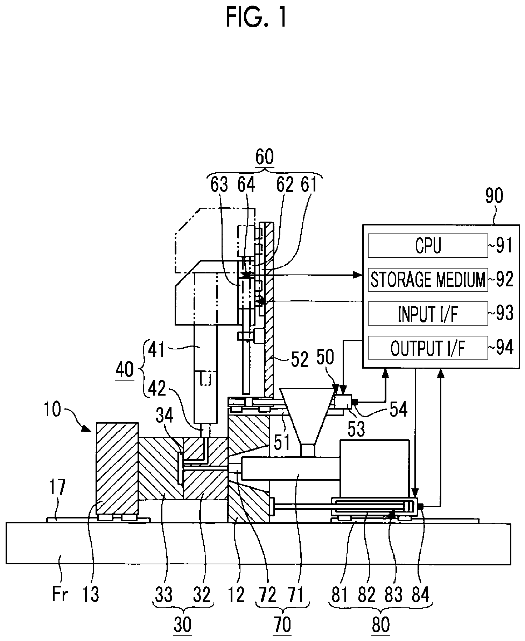

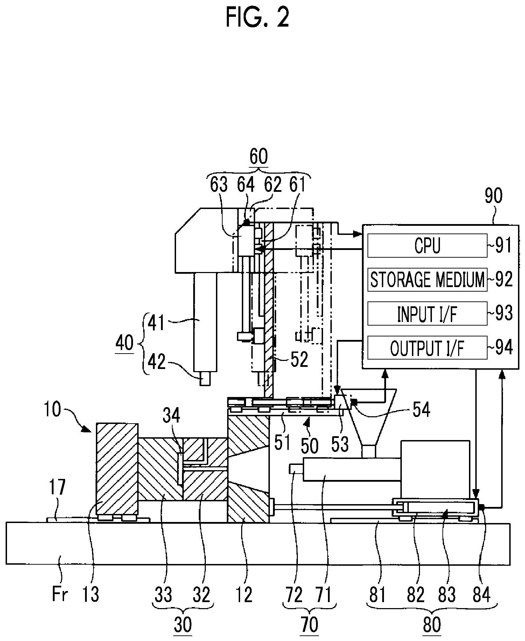

Fig. 1 is a diagram showing an operation of an injection molding machine according to an embodiment and is a diagram showing an operation in which a first nozzle of a first injection unit slides in an up-and-down direction while facing a nozzle receiving portion on the upper surface of a stationary mold. In Fig. 1, a solid line shows a state where a first nozzle 42 is in contact with the nozzle receiving portion on the upper surface of a stationary mold 32, and a two-dot chain line shows a state where the first nozzle 42 is raised further toward the upper side than a stationary platen 12. Fig. 2 is a diagram showing an operation of the injection molding machine according to the embodiment and is a diagram showing an operation in which the first nozzle of the first injection unit slides in a mold opening and closing direction at a position higher than the stationary platen. In Fig. 2, a solid line shows a state where the first nozzle 42 faces the nozzle receiving portion on the upper surface of the stationary mold 32, and a two-dot chain line shows a state where the first nozzle 42 faces the stationary platen 12.

As shown in Figs. 1 and 2, the injection molding machine has a mold clamping unit 10 which performs mold closing, mold clamping, and mold opening of a mold unit 30, an injection unit which fills the mold unit 30 with a molding material, and a controller 90 which controls the mold clamping unit 10 and the injection unit. As the injection unit, a first injection unit 40 and a second injection unit 70 are used. The injection molding machine has a first slide unit 50 which slides the first injection unit 40 in a first direction with respect to the mold clamping unit 10, and a second slide unit 60 which slides the first injection unit 40 in a second direction different from the first direction with respect to the mold clamping unit 10. Further, the injection molding machine has a third slide unit 80 which slides the second injection unit 70 with respect to the mold clamping unit 10. Hereinafter, a direction of movement (a rightward direction in the drawings) of a movable platen 13 when performing the mold closing will be described as being forward and a direction of movement (a leftward direction in the drawings) of the movable platen 13 when performing the mold opening will be described as being backward.

The mold clamping unit 10 performs the mold closing, the mold clamping, and the mold opening of the mold unit 30 under the control by the controller 90. The mold opening and closing direction of the mold clamping unit 10 is a horizontal direction. The mold clamping unit 10 has the stationary platen 12, the movable platen 13, and the like. The stationary platen 12 is fixed to a frame Fr. The stationary mold 32 is mounted on the surface facing the movable platen 13 in the stationary platen 12. On the other hand, the movable platen 13 is made so as to be able to move along a guide (for example, a guide rail) 17 which is laid on the frame Fr. A movable mold 33 is mounted on the surface facing the stationary platen 12 in the movable platen 13. The mold unit 30 is configured of the stationary mold 32 and the movable mold 33.

The movable platen 13 advances and retracts with respect to the stationary platen 12, whereby the mold closing, the mold clamping, and the mold opening are performed. The mold closing is performed by bringing the movable mold 33 into contact with the stationary mold 32 by advancing the movable platen 13. Subsequently, the mold clamping is performed by generating a mold clamping force by further advancing the movable platen 13. A cavity 34 is formed between the movable mold 33 and the stationary mold 32 at the time of the mold clamping, and the cavity 34 is filled with a liquid molding material. The filled molding material is solidified, whereby a molding product is obtained. The number of cavities 34 may be plural, and in that case, a plurality of molding products are obtained at the same time. Thereafter, the mold opening is performed by separating the movable mold 33 from the stationary mold 32 by retracting the movable platen 13.

The first injection unit 40 fills the inside of the mold unit 30 with a molding material from above the mold unit 30 under the control by the controller 90. The first injection unit 40 has a first cylinder 41, the first nozzle 42, and the like. The first cylinder 41 heats the molding material supplied to the inside of the first cylinder 41. The axial direction of the first cylinder 41 is made so as to be the up-and-down direction. The first nozzle 42 is provided at a lower end of the first cylinder 41 and injects the molding material heated in the first cylinder 41. The first nozzle 42 is pressed against the mold unit 30 (for example, the stationary mold 32) and fills the mold unit 30 with the molding material.

Incidentally, the first injection unit 40 is made so as to be able to slide with respect to the mold clamping unit 10 in the mold opening and closing direction and the up-and-down direction for the purpose of maintenance of the first injection unit 40, replacement of the mold unit 30, a change of the contact position of the first nozzle 42 according to the replacement of the mold unit 30, or the like. The mold opening and closing direction corresponds to a first direction stated in the claims and the up-and-down direction corresponds to a second direction stated in the claims.

The first slide unit 50 slides the first injection unit 40 in the mold opening and closing direction with respect to the mold clamping unit 10. The first slide unit 50 has, for example, a first slide guide 51, a first slide frame 52, a first slide drive unit 53, and a first position detector 54.

The first slide guide 51 is fixed to, for example, an upper portion of the stationary platen 12 and guides the first slide frame 52 in the mold opening and closing direction. The first slide frame 52 supports the first injection unit 40, and the first injection unit 40 slides in the mold opening and closing direction along with the first slide frame 52.

The first slide drive unit 53 may be configured with, for example, an electric motor. The rotation motion of the electric motor is converted into the linear motion of the first slide frame 52 by a motion conversion mechanism such as a ball screw. The first slide frame 52 slides in the mold opening and closing direction, whereby the first injection unit 40 slides in the mold opening and closing direction.

The first position detector 54 detects the position of the first injection unit 40 in the mold opening and closing direction. As the first position detector 54, a non-contact type proximity switch, a contact type limit switch, a displacement sensor, an encoder which detects the rotation angle of the electric motor as the first slide drive unit 53, or the like is used.

In this embodiment, as the first slide drive unit 53, the electric motor is used. However, a hydraulic cylinder may be used. Further, instead of the electric motor, a manual handle may be used, and the first slide unit 50 may be operated manually.

The second slide unit 60 slides the first injection unit 40 in the up-and-down direction with respect to the mold clamping unit 10. The second slide unit 60 has, for example, a second slide guide 61, a second slide frame 62, a second slide drive unit 63, and a second position detector 64.

The second slide guide 61 is fixed to, for example, the first slide frame 52 and guides the second slide frame 62 in the up-and-down direction. The second slide frame 62 supports the first injection unit 40, and the first injection unit 40 slides in the up-and-down direction along with the second slide frame 62.

The second slide drive unit 63 may be configured with, for example, an electric motor. The rotation motion of the electric motor is converted into the linear motion of the second slide frame 62 by a motion conversion mechanism such as a ball screw. The second slide frame 62 slides in the up-and-down direction, whereby the first injection unit 40 slides in the up-and-down direction.

The second position detector 64 detects the position of the first injection unit 40 in the up-and-down direction. As the second position detector 64, a non-contact type proximity switch, a contact type limit switch, a displacement sensor, an encoder which detects the rotation angle of the electric motor as the second slide drive unit 63, or the like is used.

In this embodiment, as the second slide drive unit 63, the electric motor is used. However, a hydraulic cylinder may be used.

The controller 90 has a central processing unit (CPU) 91, a storage medium 92 such as a memory, an input interface 93, and an output interface 94. The controller 90 performs various controls by executing a program stored in the storage medium 92 in the CPU 91. Further, the controller 90 receives a signal from the outside through the input interface 93 and transmits a signal to the outside through the output interface 94.

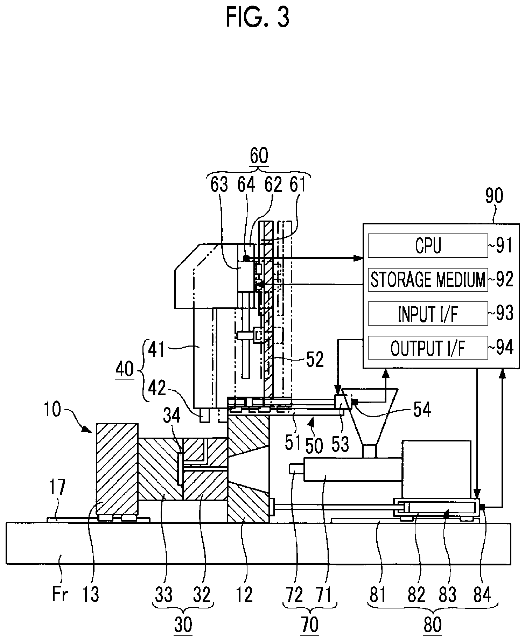

Fig. 3 is a diagram showing an operation of the injection molding machine according to the embodiment and is a diagram showing an operation in which the first nozzle of the first injection unit slides in the mold opening and closing direction at a position higher than the stationary mold and lower than the stationary platen. In Fig. 3, a solid line shows a state where the first nozzle 42 faces the nozzle receiving portion on the upper surface of the stationary mold 32, and a two-dot chain line shows a state where the first nozzle 42 is in contact with the stationary platen 12.

The controller 90 doubles as a monitoring unit which determines whether or not a predetermined unit (for example, the stationary platen 12 of the mold clamping unit 10) interferes with the sliding of the first injection unit 40 in the mold opening and closing direction, based on the position of the first injection unit 40 in the up-and-down direction. For example, in a case where the position of the first injection unit 40 in the up-and-down direction is the position shown in Fig. 2, the stationary platen 12 is not present within the range of the sliding of the first injection unit 40 in the mold opening and closing direction, and thus, interference such as a contact or a collision does not occur. Therefore, the stationary platen 12 does not interfere with the sliding of the first injection unit 40 in the mold opening and closing direction. On the other hand, in a case where the position of the first injection unit 40 in the up-and-down direction is the position shown in Fig. 3, the stationary platen 12 is present within the range of the sliding of the first injection unit 40 in the mold opening and closing direction, and thus, interference such as a contact or a collision occurs . Therefore, the stationary platen 12 interferes with the sliding of the first injection unit 40 in the mold opening and closing direction.

The relationship between the position of the first injection unit 40 in the up-and-down direction and whether or not the stationary platen 12 interferes with the sliding of the first injection unit 40 in the mold opening and closing direction is determined in advance by calculation or the like and stored in the storage medium 92. The determination of whether or not the stationary platen 12 interferes with the sliding of the first injection unit 40 in the mold opening and closing direction is performed based on information stored in the storage medium 92 and information which is obtained by the second position detector 64.

As described above, the controller 90 of this embodiment determines whether or not the stationary platen 12 interferes with the sliding of the first injection unit 40 in the mold opening and closing direction, based on the position of the first injection unit 40 in the up-and-down direction. Accordingly, the contact between the first injection unit 40 and the stationary platen 12 due to the sliding of the first injection unit 40 in the mold opening and closing direction can be prevented, and thus breakage of them can be prevented.

For example, the controller 90 outputs an alarm in a case where it is determined that the stationary platen 12 interferes with the sliding of the first injection unit 40 in the mold opening and closing direction. This alarm is output in the form of an image, sound, a buzzer, or the like. An output timing of this alarm is, for example, when it has been determined that the stationary platen 12 interferes with the sliding of the first injection unit 40 in the mold opening and closing direction, and may be when the sliding in the mold opening and closing direction of the first injection unit 40 toward the stationary platen 12 has been detected.

Further, the controller 90 may restrict the sliding in the mold opening and closing direction of the first injection unit 40 toward the stationary platen 12 in a case where it is determined that the stationary platen 12 interferes with the sliding of the first injection unit 40 in the mold opening and closing direction. In this restriction, the entire sliding of the sliding in the mold opening and closing direction of the first injection unit 40 toward the stationary platen 12 may be prohibited, and the sliding beyond a predetermined position may be prohibited. It is enough if the first injection unit 40 does not come into contact with the stationary platen 12. The prohibition of the sliding of the first injection unit 40 in the mold opening and closing direction is performed by the prohibition of an operation of the first slide drive unit 53, the locking of a manual handle which is used instead of the first slide drive unit 53, or the like. The release of this restriction is performed in a case where the first injection unit 40 has been slid in the up-and-down direction to a position where the stationary platen 12 does not get in the way thereof (for example, the position shown in Fig. 2).

Further, the controller 90 may slide the first injection unit 40 in the up-and-down direction to a position where the stationary platen 12 does not get in the way thereof, in a case where it is determined that the stationary platen 12 interferes with the sliding of the first injection unit 40 in the mold opening and closing direction. This sliding maybe performed, for example, after it is determined that the stationary platen 12 interferes with the sliding of the first injection unit 40 in the mold opening and closing direction, and when the sliding of the first injection unit 40 in the mold opening and closing direction toward the stationary platen 12 has been detected. During this time, the sliding in the mold opening and closing direction of the first injection unit 40 toward the stationary platen 12 is interrupted.

Further, the controller 90 may slide the first injection unit 40 in the up-and-down direction to a position where the stationary platen 12 does not get in the way thereof, in a case where it is determined that the stationary platen 12 interferes with the sliding of the first injection unit 40 in the mold opening and closing direction, before the sliding in the mold opening and closing direction of the first injection unit 40 toward the stationary platen 12 is carried out. Thereafter, the sliding of the first injection unit 40 in the mold opening and closing direction may be carried out.

In Fig. 3, a unit which interferes with the sliding of the first injection unit 40 in the mold opening and closing direction is the mold clamping unit 10. However, it may be the mold unit 30. Further, in Fig. 3, a member which comes into contact with the other unit, of the first injection unit 40, is the first nozzle 42. However, it may be the first cylinder 41.

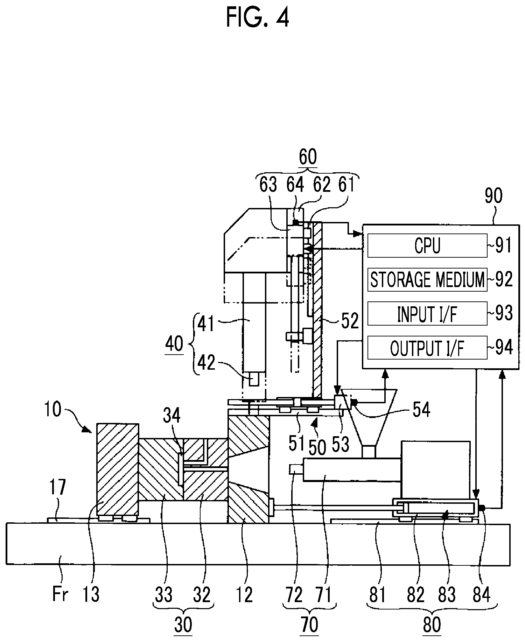

Fig. 4 is a diagram showing an operation of the injection molding machine according to the embodiment and is a diagram showing an operation in which the first nozzle of the first injection unit slides in the up-and-down direction at a position which faces the stationary platen. In Fig. 4, a solid line shows a state where the first nozzle 42 is raised further toward the upper side than the stationary platen 12, and a two-dot chain line shows a state where the first nozzle 42 is in contact with the stationary platen 12.

The controller 90 doubles as a monitoring unit which determines whether or not a predetermined unit (for example, the stationary platen 12 of the mold clamping unit 10) interferes with the sliding of the first injection unit 40 in the up-and-down direction, based on the position of the first injection unit 40 in the mold opening and closing direction. For example, in a case where the position of the first injection unit 40 in the mold opening and closing direction is the position shown in Fig. 1, the stationary platen 12 is not present within the range of the sliding of the first injection unit 40 in the up-and-down direction, and thus, interference such as a contact or a collision does not occur. Therefore, the stationary platen 12 does not interfere with the sliding of the first injection unit 40 in the up-and-down direction. On the other hand, in a case where the position of the first injection unit 40 in the mold opening and closing direction is the position shown in Fig. 4, the stationary platen 12 is present within the range of the sliding of the first injection unit 40 in the up-and-down direction, and thus, interference such as a contact or a collision occurs. Therefore, the stationary platen 12 interferes with the sliding of the first injection unit 40 in the up-and-down direction.

The relationship between the position of the first injection unit 40 in the mold opening and closing direction and whether or not the stationary platen 12 interferes with the sliding of the first injection unit 40 in the up-and-down direction is determined in advance by calculation or the like and stored in the storage medium 92. The determination of whether or not the stationary platen 12 interferes with the sliding of the first injection unit 40 in the up-and-down direction is performed based on information stored in the storage medium 92 and information which is obtained by the first position detector 54.

As described above, the controller 90 of this embodiment determines whether or not the stationary platen 12 interferes with the sliding of the first injection unit 40 in the up-and-down direction, based on the position of the first injection unit 40 in the mold opening and closing direction. Accordingly, the contact between the first injection unit 40 and the stationary platen 12 due to the sliding of the first injection unit 40 in the up-and-down direction can be prevented, and thus breakage of them can be prevented.

In a case where it is determined that the stationary platen 12 interferes with the sliding of the first injection unit 40 in the up-and-down direction, similar to a case where it is determined that the stationary platen 12 interferes with the sliding of the first injection unit 40 in the mold opening and closing direction, the controller 90 may perform output of an alarm, a restriction of the sliding of the first injection unit 40 in the up-and-down direction, the sliding of the first injection unit 40 in the mold opening and closing direction, or the like.

In this embodiment, the mold opening and closing direction corresponds to the first direction stated in the claims and the up-and-down direction corresponds to the second direction stated in the claims. However, the first direction and the second direction may be reversed. That is, the mold opening and closing direction may correspond to the second direction stated in the claims and the up-and-down direction may correspond to the first direction stated in the claims. Further, the first direction and the second direction are not limited to the mold opening and closing direction or the up-and-down direction and may be directions perpendicular to or directions oblique to the mold opening and closing direction or the up-and-down direction. Further, the first injection unit 40 may be made so as to be able to slide in three or more directions.

The second injection unit 70 fills the inside of the mold unit 30 with a molding material from one side (the right side in the drawing) in the mold opening and closing direction of the mold unit 30 under the control by the controller 90. The second injection unit 70 has a second cylinder 71, a second nozzle 72, and the like. The second cylinder 71 heats the molding material supplied to the inside of the second cylinder 71. The axial direction of the second cylinder 71 is made so as to be the mold opening and closing direction. The second nozzle 72 is provided at the tip of the second cylinder 71 and injects the molding material heated in the second cylinder 71. The second nozzle 72 is pressed against the mold unit 30 (for example, the stationary mold 32) and fills the mold unit 30 with the molding material.

The molding material which is filled from the second injection unit 70 into the mold unit 30 and the molding material which is filled from the first injection unit 40 into the mold unit 30 may be the same type or different types. Further, the molding material which is filled from the second injection unit 70 into the mold unit 30 and the molding material which is filled from the first injection unit 40 into the mold unit 30 may be stacked in order in the mold unit 30 or may be mixed in the mold unit 30.

The third slide unit 80 slides the second injection unit 70 in the mold opening and closing direction with respect to the mold clamping unit 10 independently of the first injection unit 40. The third slide unit 80 has, for example, a third slide guide 81, a third slide frame 82, a third slide drive unit 83, and a third position detector 84.

The third slide guide 81 is laid on, for example, the frame Fr and guides the third slide frame 82 in the mold opening and closing direction. The third slide frame 82 supports the second injection unit 70, and the second injection unit 70 slides in the mold opening and closing direction along with the third slide frame 82.

The third slide drive unit 83 is configured with, for example, a hydraulic cylinder and extends and contracts in the mold opening and closing direction, thereby sliding the third slide frame 82 in the mold opening and closing direction. In this way, the second injection unit 70 slides in the mold opening and closing direction.

The third position detector 84 detects the position of the second injection unit 70 in the mold opening and closing direction . As the third position detector 84, a non-contact type proximity switch, a contact type limit switch, a displacement sensor, or the like is used. Further, in a case where an electric motor is used as the third slide drive unit 83, an encoder which detects the rotation angle of the electric motor may be used as the third position detector 84.

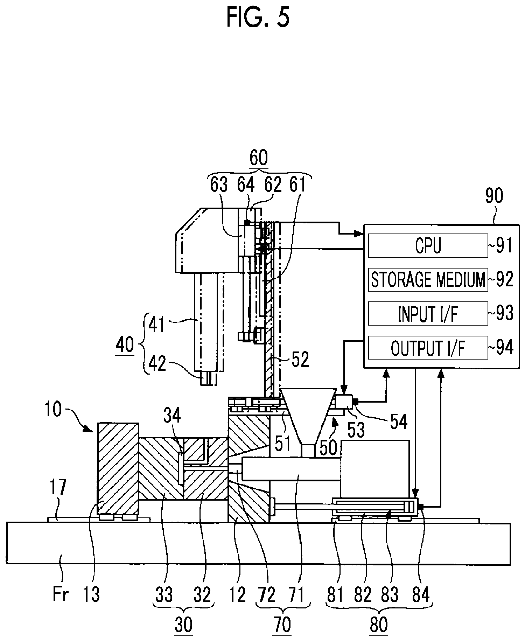

Fig. 5 is a diagram showing an operation of the injection molding machine according to the embodiment and is a diagram showing an operation in which the first nozzle of the first injection unit slides in the mold opening and closing direction at a position higher than the stationary platen in a state where the second nozzle of the second injection unit is in contact with the mold unit. In Fig. 5, a solid line shows a state where the first nozzle 42 faces the nozzle receiving portion on the upper surface of the stationary mold 32, and a two-dot chain line shows a state where the first slide frame 52 which slides in the mold opening and closing direction along with the first injection unit 40 is in contact with the second injection unit 70.

The controller 90 doubles as a monitoring unit which determines whether or not the second injection unit 70 interferes with the sliding of the first injection unit 40 in the mold opening and closing direction, based on the position of the second injection unit 70 in the mold opening and closing direction. For example, in a case where the position of the second injection unit 70 in the mold opening and closing direction is the position shown in Fig. 2, the second injection unit 70 is not present within the range of the sliding of the first slide frame 52, and thus, interference such as a contact or a collision does not occur. Therefore, the second injection unit 70 does not interfere with the sliding of the first injection unit 40 in the mold opening and closing direction. On the other hand, in a case where the position of the second injection unit 70 in the mold opening and closing direction is the position shown in Fig. 5, the second injection unit 70 is present within the range of the sliding of the first slide frame 52, and thus, interference such as a contact or a collision occurs . Therefore, the second injection unit 70 interferes with the sliding of the first injection unit 40 in the mold opening and closing direction.

The relationship between the position of the second injection unit 70 in the mold opening and closing direction and whether or not the second injection unit 70 interferes with the sliding of the first injection unit 40 in the mold opening and closing direction is determined in advance by calculation or the like and stored in the storage medium 92. The determination of whether or not the second injection unit 70 interferes with the sliding of the first injection unit 40 in the mold opening and closing direction is performed based on information stored in the storage medium 92 and information which is obtained by the third position detector 84.

As described above, the controller 90 of this embodiment determines whether or not the second injection unit 70 interferes with the sliding of the first injection unit 40 in the mold opening and closing direction, based on the position of the second injection unit 70 in the mold opening and closing direction. Accordingly, the contact or collision between the first slide frame 52 and the second injection unit 70 due to the sliding of the first injection unit 40 in the mold opening and closing direction can be prevented, and thus breakage of them can be prevented.

For example, the controller 90 outputs an alarm in a case where it is determined that the second injection unit 70 interferes with the sliding of the first injection unit 40 in the mold opening and closing direction. This alarm is output in the form of an image, sound, a buzzer, or the like. An output timing of this alarm is, for example, when it has been determined that the second injection unit 70 interferes with the sliding of the first injection unit 40 in the mold opening and closing direction, and may be when the sliding in the mold opening and closing direction of the first injection unit 40 toward the second injection unit 70 has been detected.

Further, the controller 90 may restrict the sliding in the mold opening and closing direction of the first injection unit 40 toward the second injection unit 70 in a case where it is determined that the second injection unit 70 interferes with the sliding of the first injection unit 40 in the mold opening and closing direction. In this restriction, the entire sliding of the sliding in the mold opening and closing direction of the first injection unit 40 toward the second injection unit 70 may be prohibited, and the sliding beyond a predetermined position may be prohibited. It is enough if the first slide frame 52 does not come into contact with the second injection unit 70. The prohibition of the sliding of the first injection unit 40 in the mold opening and closing direction is performed by the prohibition of an operation of the first slide drive unit 53, or the like. The release of this restriction is performed in a case where the second injection unit 70 has been slid in the mold opening and closing direction to a position where it does not get in the way of the sliding of the first injection unit 40 in the mold opening and closing direction.

Further, the controller 90 may slide the second injection unit 70 in the mold opening and closing direction to a position where it does not get in the way of the sliding of the first injection unit 40 in the mold opening and closing direction, in a case where it is determined that the second injection unit 70 interferes with the sliding of the first injection unit 40 in the mold opening and closing direction. This sliding may be performed, for example, after it is determined that the second injection unit 70 interferes with the sliding of the first injection unit 40 in the mold opening and closing direction, and when the sliding in the mold opening and closing direction of the first injection unit 40 toward the second injection unit 70 has been detected. During this time, the sliding in the mold opening and closing direction of the first injection unit 40 toward the second injection unit 70 is interrupted.

Further, the controller 90 may slide the second injection unit 70 in the mold opening and closing direction to a position where it does not get in the way of the sliding of the first injection unit 40 in the mold opening and closing direction, in a case where it is determined that the second injection unit 70 interferes with the sliding of the first injection unit 40 in the mold opening and closing direction, before the sliding in the mold opening and closing direction of the first injection unit 40 toward the second injection unit 70 is carried out. Thereafter, the sliding of the first injection unit 40 in the mold opening and closing direction may be carried out.

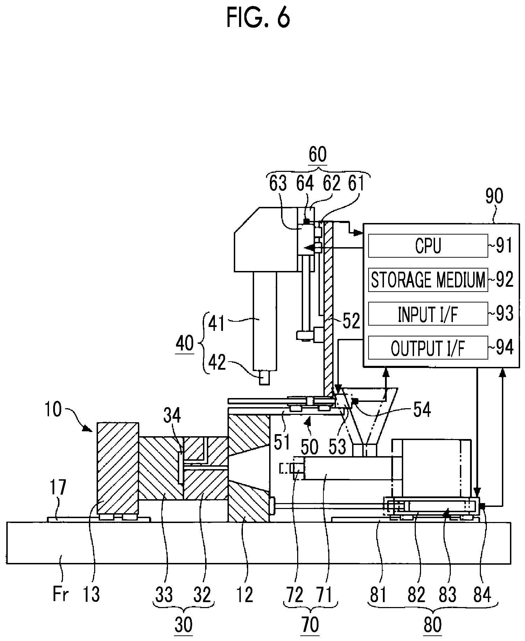

Fig. 6 is a diagram showing an operation of the injection molding machine according to the embodiment and is a diagram showing an operation in which the second injection unit slides in the mold opening and closing direction. In Fig. 6, a solid line shows a state where the second injection unit 70 is farthest from the mold unit 30, and a two-dot chain line shows a state where the second injection unit 70 is in contact with the first slide frame 52 supporting the first injection unit 40.

The controller 90 doubles as a monitoring unit which determines whether or not the first injection unit 40 interferes with the sliding of the second injection unit 70 in the mold opening and closing direction, based on the position of the first injection unit 40 in the mold opening and closing direction. For example, in a case where the position of the first injection unit 40 in the mold opening and closing direction is the position shown in Fig. 1, the first slide frame 52 supporting the first injection unit 40 is not present within the range of the sliding of the second injection unit 70 in the mold opening and closing direction, and thus, interference such as a contact or a collision does not occur. Therefore, the first injection unit 40 does not interfere with the sliding of the second injection unit 70 in the mold opening and closing direction. On the other hand, in a case where the position of the first injection unit 40 in the mold opening and closing direction is the position shown in Fig. 6, the first slide frame 52 supporting the first injection unit 40 is present within the range of the sliding of the second injection unit 70 in the mold opening and closing direction, and thus, interference such as a contact or a collision occurs. Therefore, the first injection unit 40 interferes with the sliding of the second injection unit 70 in the mold opening and closing direction.

The relationship between the position of the first injection unit 40 in the mold opening and closing direction and whether or not the first injection unit 40 interferes with the sliding of the second injection unit 70 in the mold opening and closing direction is determined in advance by calculation or the like and stored in the storage medium 92. The determination of whether or not the first injection unit 40 interferes with the sliding of the second injection unit 70 in the mold opening and closing direction is performed based on information stored in the storage medium 92 and information which is obtained by the first position detector 54.

As described above, the controller 90 of this embodiment determines whether or not the first injection unit 40 interferes with the sliding of the second injection unit 70 in the mold opening and closing direction, based on the position of the first injection unit 40 in the mold opening and closing direction. Accordingly, the contact between the second injection unit 70 and the first slide frame 52 due to the sliding of the second injection unit 70 in the mold opening and closing direction can be prevented, and thus breakage of them can be prevented.

In a case where it is determined that the first injection unit 40 interferes with the sliding of the second injection unit 70 in the mold opening and closing direction, similar to a case where it is determined that the second injection unit 70 interferes with the sliding of the first injection unit 40 in the mold opening and closing direction, the controller 90 may perform output of an alarm, a restriction of the sliding of the second injection unit 70, the sliding of the first injection unit 40, or the like.

The sliding direction of the second injection unit 70 is not limited to the mold opening and closing direction and may be a direction oblique to or a direction perpendicular to the mold opening and closing direction. It is enough if there is a case where the first injection unit 40 interferes with the sliding of the second injection unit 70.

The embodiment and the like of the injection molding machine have been described above. However, the present invention is not limited to the above-described embodiment and the like, and various modifications or improvements can be made within the scope of the concept of the present invention stated in the appended claims.

In the above-described embodiment, the controller 90 doubles as the monitoring unit. However, the controller 90 and the monitoring unit may be provided separately.

In the above-described embodiment, as the mold clamping unit, a transverse mold clamping unit in which the mold opening and closing direction is the horizontal direction is used. However, a vertical mold clamping unit in which the mold opening and closing direction is the up-and-down direction may be used.

In the above-described embodiment, as the first injection unit 40, a vertical injection unit in which the axial direction of the first cylinder 41 is the up-and-down direction is used. However, a transverse injection unit in which the axial direction of the first cylinder 41 is the horizontal direction may be used. The axial direction of the first cylinder 41 is not particularly limited and may be, for example, a direction oblique to the up-and-down direction or the horizontal direction.

In the above-described embodiment, the first injection unit 40 is made so as to be able to slide in two directions. However, the first injection unit 40 may be made so as to be able to slide in three or more directions.

In the above-described embodiment, as the second injection unit 70, a transverse injection unit in which the axial direction of the second cylinder 71 is the horizontal direction is used. However, a vertical injection unit in which the axial direction of the second cylinder 71 is the up-and-down direction may be used. The axial direction of the second cylinder 71 is not particularly limited and may be, for example, a direction oblique to the up-and-down direction or the horizontal direction.

In the above-described embodiment, the second injection unit 70 is made so as to be able to slide in a single direction. However, the second injection unit 70 may be made so as to be able to slide in two or more directions.

In the above-described embodiment, the number of injection units which are provided in the injection molding machine is two. However, the number of injection units may be one or may be three or more.

### Brief Description of the Reference Symbols

- 10:: mold clamping unit
- 12:: stationary platen
- 13:: movable platen
- 30:: mold unit
- 32:: stationary mold
- 33:: movable mold
- 40:: first injection unit
- 41:: first cylinder
- 42:: first nozzle
- 50:: first slide unit
- 60:: second slide unit
- 70:: second injection unit
- 71:: second cylinder
- 72:: second nozzle
- 80:: third slide unit
- 90:: controller

## Claims

1. An injection molding machine comprising:
a mold clamping unit (10) which is configured to perform mold closing, mold clamping, and mold opening of a mold unit (30) ;
an injection unit which is made so as to be able to slide with respect to the mold clamping unit (10) in a first direction and a second direction which are different from each other and to fill the inside of the mold unit (30) with a molding material; and
a monitoring unit which is configured to determine whether or not a predetermined unit interferes with sliding of the injection unit in the first direction, based on a position of the injection unit in the second direction.

2. The injection molding machine according to Claim 1, wherein the monitoring unit is configured to output an alarm in a case where it is determined that a predetermined unit interferes with sliding of the injection unit in the first direction.

3. The injection molding machine according to Claim 1 or 2, wherein the monitoring unit is configured to restrict sliding in the first direction of the injection unit toward a predetermined unit in a case where it is determined that the predetermined unit interferes with sliding of the injection unit in the first direction.

4. The injection molding machine according to any one of Claims 1 to 3, wherein the monitoring unit is configured to slide the injection unit in the second direction to a position where a predetermined unit does not get in the way thereof, in a case where it is determined that the predetermined unit interferes with sliding of the injection unit in the first direction.

5. The injection molding machine according to any one of Claims 1 to 4, wherein the monitoring unit is configured to determine whether or not a predetermined unit interferes with sliding of the injection unit in the second direction, based on a position of the injection unit in the first direction.

6. The injection molding machine according to any one of Claims 1 to 5, wherein if the injection unit is referred to as a first injection unit (40), the injection molding machine further comprises a second injection unit (70) which is made so as to be able to slide with respect to the mold clamping unit (10) independently of the first injection unit (40) and to fill the inside of the mold unit (30) with a molding material, and
the monitoring unit is configured to determine whether or not the injection unit on one side out of the first injection unit (40) and the second injection unit (70) interferes with sliding of the injection unit on the other side, based on a position of the injection unit on one side.

7. An injection molding machine comprising:
a mold clamping unit (10) which is configured to perform mold closing, mold clamping, and mold opening of a mold unit (30) ;
a first injection unit (40) which is made so as to be able to slide with respect to the mold clamping unit (10) and to fill the inside of the mold unit (30) with a molding material;
a second injection unit (70) which is made so as to be able to slide with respect to the mold clamping unit (10) independently of the first injection unit (40) and to fill the inside of the mold unit (30) with a molding material; and
a monitoring unit which is configured to determine whether or not the injection unit on one side out of the first injection unit (40) and the second injection unit (70) interferes with sliding of the injection unit on the other side, based on a position of the injection unit on one side.

8. The injection molding machine according to Claim 6 or 7, wherein the monitoring unit is configured to output an alarm in a case where it is determined that the injection unit on one side interferes with sliding of the injection unit on the other side.

9. The injection molding machine according to any one of Claims 6 to 8, wherein the monitoring unit is configured to restrict sliding of the injection unit on the other side toward the injection unit on one side in a case where it is determined that the injection unit on one side interferes with sliding of the injection unit on the other side.

10. The injection molding machine according to any one of Claims 6 to 9, wherein the monitoring unit is configured to slide the injection unit on one side to a position where the injection unit on one side does not get in the way of sliding of the injection unit on the other hand, in a case where it is determined that the injection unit on one side interferes with sliding of the injection unit on the other side.

11. The injection molding machine according to any one of Claims 6 to 10, wherein the monitoring unit is configured to determine whether or not the injection unit on the other side interferes with sliding of the injection unit on one side, based on a position of the injection unit on the other side.

## Patentansprüche

1. Spritzgießmaschine, umfassend:
eine Formschließeinheit (10), die konfiguriert ist, um das Schließen der Form, das Klemmen der Form und das Öffnen der Form einer Formeinheit (30) durchzuführen;
eine Einspritzeinheit, die so hergestellt ist, dass sie in der Lage ist, in Bezug auf die Formschließeinheit (10) in einer ersten Richtung und einer zweiten Richtung, die sich voneinander unterscheiden, zu gleiten und das Innere der Formeinheit (30) mit einem Formmaterial zu füllen; und
eine Überwachungseinheit, die konfiguriert ist, um zu bestimmen, ob eine vorbestimmte Einheit das Gleiten der Einspritzeinheit in der ersten Richtung beeinträchtigt oder nicht, basierend auf einer Position der Einspritzeinheit in der zweiten Richtung.

2. Spritzgießmaschine nach Anspruch 1, wobei die Überwachungseinheit konfiguriert ist, um einen Alarm in einem Fall auszugeben, in dem bestimmt wird, dass eine vorbestimmte Einheit das Gleiten der Einspritzeinheit in der ersten Richtung beeinträchtigt.

3. Spritzgießmaschine nach Anspruch 1 oder 2, wobei die Überwachungseinheit konfiguriert ist, um das Gleiten in der ersten Richtung der Einspritzeinheit in Richtung einer vorbestimmten Einheit in einem Fall zu beschränken, in dem bestimmt wird, dass die vorbestimmte Einheit das Gleiten der Einspritzeinheit in die erste Richtung beeinträchtigt.

4. Spritzgießmaschine nach einem der Ansprüche 1 bis 3, wobei die Überwachungseinheit konfiguriert ist, um die Einspritzeinheit in der zweiten Richtung in eine Position zu schieben, in der eine vorbestimmte Einheit nicht im Wege steht, in einem Fall, wenn bestimmt wird, dass die vorbestimmte Einheit das Gleiten der Einspritzeinheit in der ersten Richtung beeinträchtigt.

5. Spritzgießmaschine nach einem der Ansprüche 1 bis 4, wobei die Überwachungseinheit konfiguriert ist, um zu bestimmen, ob eine vorbestimmte Einheit das Gleiten der Einspritzeinheit in der zweiten Richtung beeinträchtigt oder nicht, basierend auf einer Position der Einspritzeinheit in der ersten Richtung.

6. Spritzgießmaschine nach einem der Ansprüche 1 bis 5, wobei, wenn die Einspritzeinheit als eine erste Einspritzeinheit (40) bezeichnet wird, die Spritzgießmaschine ferner eine zweite Einspritzeinheit (70) umfasst, die so hergestellt ist, dass sie in der Lage ist, unabhängig von der ersten Einspritzeinheit (40) in Bezug auf die Formschließeinheit (10) zu gleiten und das Innere der Formeinheit (30) mit einem Formmaterial zu füllen, und
die Überwachungseinheit konfiguriert ist, um zu bestimmen, ob die Einspritzeinheit auf einer Seite aus der ersten Einspritzeinheit (40) und die zweite Einspritzeinheit (70) das Gleiten der Einspritzeinheit auf der anderen Seite beeinträchtigt oder nicht, basierend auf einer Position der Einspritzeinheit auf einer Seite.

7. Spritzgießmaschine, umfassend:
eine Formschließeinheit (10), die konfiguriert ist, um das Schließen der Form, das Klemmen der Form und das Öffnen der Form einer Formeinheit (30) durchzuführen;
eine erste Einspritzeinheit (40), die so hergestellt ist, dass sie in der Lage ist, in Bezug auf die Formschließeinheit (10) zu gleiten und das Innere der Formeinheit (30) mit einem Formmaterial zu füllen;
eine zweite Einspritzeinheit (70), die so hergestellt ist, dass sie in der Lage ist, unabhängig von der ersten Einspritzeinheit (40) in Bezug auf die Formschließeinheit (10) zu gleiten und das Innere der Formeinheit (30) mit einem Formmaterial zu füllen; und
eine Überwachungseinheit, die konfiguriert ist, um zu bestimmen, ob die Einspritzeinheit auf der einen Seite aus der ersten Einspritzeinheit (40) und die zweite Einspritzeinheit (70) das Gleiten der Einspritzeinheit auf der anderen Seite beeinträchtigt oder nicht, basierend auf einer Position der Einspritzeinheit auf einer Seite.

8. Spritzgießmaschine nach Anspruch 6 oder 7, wobei die Überwachungseinheit konfiguriert ist, um einen Alarm in einem Fall auszugeben, in dem bestimmt wird, dass die Einspritzeinheit auf der einen Seite das Gleiten der Einspritzeinheit auf der anderen Seite beeinträchtigt.

9. Spritzgießmaschine nach einem der Ansprüche 6 bis 8, wobei die Überwachungseinheit konfiguriert ist, um das Gleiten der Einspritzeinheit auf der anderen Seite in Richtung der Einspritzeinheit auf der einen Seite in einem Fall zu beschränken, in dem bestimmt wird, dass die Einspritzeinheit auf der einen Seite das Gleiten der Einspritzeinheit auf der anderen Seite beeinträchtigt.

10. Spritzgießmaschine nach einem der Ansprüche 6 bis 9, wobei die Überwachungseinheit konfiguriert ist, um die Einspritzeinheit auf der einen Seite in eine Position zu schieben, in der die Einspritzeinheit auf der einen Seite dem Gleiten der Einspritzeinheit andererseits nicht im Wege steht in einem Fall, in dem bestimmt wird, dass die Einspritzeinheit auf der einen Seite das Gleiten der Einspritzeinheit auf der anderen Seite beeinträchtigt.

11. Spritzgießmaschine nach einem der Ansprüche 6 bis 10, wobei die Überwachungseinheit konfiguriert ist, um zu bestimmen, ob die Einspritzeinheit auf der anderen Seite das Gleiten der Einspritzeinheit auf der einen Seite beeinträchtigt oder nicht, basierend auf einer Position der Einspritzeinheit auf der anderen Seite.

## Revendications

1. Une machine de moulage par injection comprenant :
une unité de fixation de moule (10) qui est configurée pour effectuer la fermeture de moule, la fixation de moule et l'ouverture de moule d'une unité de moule (30) ;
une unité d'injection qui est prévue de façon à pouvoir coulisser par rapport à l'unité de fixation de moule (10) dans une première direction et une seconde direction qui sont différentes l'une de l'autre, et de remplir l'intérieur de l'unité de moule (30) avec un matériau de moulage ;
et
une unité de surveillance qui est configurée pour déterminer si une unité prédéterminée empêche ou non le coulissement de l'unité d'injection dans la première direction, sur la base d'une position de l'unité d'injection dans la seconde direction.

2. La machine de moulage par injection selon la revendication 1, dans laquelle l'unité de surveillance est configurée pour délivrer une alarme lorsqu'il est déterminé qu'une unité prédéterminée empêche le coulissement de l'unité d'injection dans la première direction.

3. La machine de moulage par injection selon la revendication 1 ou 2, dans laquelle l'unité de surveillance est configurée pour restreindre le coulissement dans la première direction de l'unité d'injection vers une unité prédéterminée lorsqu'il est déterminé que l'unité prédéterminée empêche le coulissement de l'unité d'injection dans la première direction.

4. La machine de moulage par injection selon l'une quelconque des revendications 1 à 3, dans laquelle l'unité de surveillance est configurée pour faire coulisser l'unité d'injection dans la seconde direction vers une position dans laquelle une unité prédéterminée ne se trouve pas sur le trajet de celle-ci, lorsqu'il est déterminé que l'unité prédéterminée empêche le coulissement de l'unité d'injection dans la première direction.

5. La machine de moulage par injection selon l'une quelconque des revendications 1 à 4, dans laquelle l'unité de surveillance est configurée pour déterminer si une unité prédéterminée empêche ou non le coulissement de l'unité d'injection dans la seconde direction, sur la base d'une position de l'unité d'injection dans la première direction.

6. La machine de moulage par injection selon l'une quelconque des revendications 1 à 5, dans laquelle, si l'unité d'injection est désignée comme étant une première unité d'injection (40), la machine de moulage par injection comprend en outre une seconde unité d'injection (70) qui est prévue de façon à pouvoir coulisser par rapport à l'unité de fixation de moule (10) indépendamment de la première unité d'injection (40), et à remplir l'intérieur de l'unité de moule (30) avec un matériau de moulage, et
l'unité de surveillance est configurée pour déterminer si l'unité d'injection qui se trouve sur un côté, parmi la première unité d'injection (40) et la seconde unité d'injection (70), empêche ou non le coulissement de l'unité d'injection de l'autre côté, sur la base d'une position de l'unité d'injection sur un côté.

7. La machine de moulage par injection comprenant :
une unité de fixation de moule (10) qui est configurée pour effectuer une fermeture de moule, une fixation de moule, et une ouverture de moule d'une unité de moule (30) ;
une première unité d'injection (40) qui est prévue de façon à pouvoir coulisser par rapport à l'unité de fixation de moule (10) et à remplir l'intérieur de l'unité de mule (30) avec un matériau de moulage ;
une seconde unité d'injection (70) qui est prévue de façon à pouvoir coulisser par rapport à l'unité de fixation de moule (10) indépendamment de la première unité d'injection (40) et à remplir l'intérieur de l'unité de moule (30) avec un matériau de moulage ; et
une unité de surveillance qui est configurée pour déterminer si l'unité d'injection sur un côté, parmi la première unité d'injection (40) et la seconde unité d'injection (70), empêche ou non le coulissement de l'unité d'injection de l'autre côté, sur la base d'une position de l'unité d'injection sur un côté.

8. La machine de moulage par injection selon la revendication 6 ou 7, dans laquelle l'unité de surveillance est configurée pour délivrer une alarme lorsqu'il est déterminé que l'unité d'injection sur un côté empêche le coulissement de l'unité d'injection de l'autre côté.

9. La machine de moulage par injection selon l'une quelconque des revendications 6 à 8, dans laquelle l'unité de surveillance est configurée pour restreindre le coulissement de l'unité d'injection de l'autre côté, vers l'unité d'injection sur un côté, lorsqu'il est déterminé que l'unité d'injection sur un côté empêche le coulissement de l'unité d'injection de l'autre côté.

10. La machine de moulage par injection selon l'une quelconque des revendications 6 à 9, dans laquelle l'unité de surveillance est configurée pour faire coulisser l'unité d'injection sur un côté vers une position dans laquelle l'unité d'injection sur un côté ne se trouve pas sur le trajet de coulissement de l'unité d'injection de l'autre côté, lorsqu'il est déterminé que l'unité d'injection d'un côté empêche le coulissement de l'unité d'injection de l'autre côté.

11. La machine de moulage par injection selon l'une quelconque des revendications 6 à 10, dans laquelle l'unité de surveillance est configurée pour déterminer si l'unité d'injection de l'autre côté empêche ou non le coulissement de l'unité d'injection d'un côté, sur la base d'une position de l'unité d'injection de l'autre côté.
